(19) Europäisches Patentamt
European Patent Office
Office européen des brevets

(11) **EP 2 813 836 A1**

(12) **EUROPEAN PATENT APPLICATION**
published in accordance with Art. 153(4) EPC

(43) Date of publication:
**17.12.2014 Bulletin 2014/51**

(51) Int Cl.:
*G01N 3/04* (2006.01)  *G01N 3/08* (2006.01)

(21) Application number: **12715411.0**

(22) Date of filing: **10.02.2012**

(86) International application number:
**PCT/ES2012/070087**

(87) International publication number:
**WO 2013/117779 (15.08.2013 Gazette 2013/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fundación Para La Investigación, Desarrollo Y Aplicación De Materiales Compuestos (FIDAMC) 28906 Getafe (ES)**

(72) Inventors:
• **DE CASTRO NODAL, Manuel**
  E-28906 Getafe (ES)
• **REMACHA JIMÉNEZ, Marina**
  E-28906 Getafe (ES)

(74) Representative: **Elzaburu S.L.P.**
  C/ Miguel Angel, 21
  28010 Madrid (ES)

(54) **TOOL FOR POST-IMPACT COMPRESSION TESTS**

(57) The invention relates to a tool (10) for performing compression tests on test pieces (200) of a composite material that have previously been subjected to an impact, said tool (10) comprising a cavity intended to house the test piece (200) to be tested, as well as a plurality of mutually symmetrical projecting elements which support the test piece (200) and stabilise same laterally against buckling. The tool (10) comprises a stationary plate (20) and a mobile plate (30) which can slide parallel to the stationary plate (20), such that the cavity intended to house the test piece (200) is positioned between the two plates (20, 30), the aforementioned plates (20, 30) comprising the plurality of mutually symmetrical projecting elements which support the test piece (200).

FIG. 2a

EP 2 813 836 A1

# EP 2 813 836 A1

## Description

### FIELD OF THE INVENTION

The present invention discloses a tool for conducting compression tests in composite materials that have previously undergone an impact, more specifically, in low thickness materials.

### BACKGROUND OF THE INVENTION

Currently it is becoming more and more widespread to use structures comprising composite materials, which are those comprising a fibre reinforced matrix, given that they are materials which possess excellent specific properties, displaying elevated values of strength and stiffness with low weight. These types of materials are very useful in a wide variety of applications, such as, for example, aeronautics and aerospace.

In these types of structures it is important to conduct tests for the purpose of studying the residual properties of the material. Different types of tests on samples made up of composite materials are conducted, in accordance with the standards governing said tests. Thus, there is the ASTM D7136 standard test method, which lays out a test for measuring resistance to damage of a fibre reinforced polymer matrix composite material during an impact. Likewise, there is the ASTM D7137 compression standards, which establishes the residual resistance properties to compression of damaged samples made from a composite material with a polymer matrix.

Specifically, one of the most widespread tests conducted on samples of composite materials is commonly known as CAI, *Compression After Impact.*

The standard that governs compression after impact tests is the standard ASTM D7137, *"Standard Test Method for compressive residual properties of damaged polymer matrix composite plates",* cited above. This test consist in a uniaxial compression carried out on a sample of compound material having a symmetric and balanced laminate that has been damaged and inspected before the application of the cited compression force during the test. The damage to the sample is produced by a subsequently applied compressive force from outside the plane applied.

The current standards for determining compression after impact resistance strength allow testing composite material laminates to a minimum thickness of about 4 mm. The problem the current known methods have in regard to carrying out after impact compression tests on low thickness composite laminates, less than 4 mm, is that with the tool known in the standard method causes the composite material to start buckling before the after impact compressive failure of the material occurs. As a result it is really not possible to obtain the measurement being sought, namely the effect of the compression after impact.

Given that the large majority of structural components have low thickness laminates on the order of 2 mm, it is necessary to provide a tool that enables conducting after impact compression tests on these thin laminates.

The present invention is aimed at resolving this problem.

### SUMMARY OF THE INVENTION

Thus, the object of the present invention is to provide a tool that enables conducting a reliable after impact compression test on samples made of composite material, regardless of the thickness of said samples, including a thickness of less than 4 mm.

The purpose of the tool of the present invention is to also make it possible to perform the after impact compression test on thin laminates made of composite materials, with a thickness of less than 4 mm.

The main difficulty of tests on laminates having small thickness is the reduction of the critical buckling load on the samples being tested, in such a way that the buckling of these samples occurs before they are ruptured by after impact compression. Consequently is it is necessary to increase the lateral stability of said samples so as to be able to conduct said after impact compression test.

For this reason, some of the requirements that must be taken into account in the design of the tool that enables conducting these tests on laminated composites having low thickness are the following:

- The composite laminate should not reach critical buckling stress, which occurs with thin laminates before it should due to their lower thickness, because it would then be necessary to adjust some parameter of the tool so that it is able to delay buckling.
- The manner of the failure should not be produced in the zone of the application load of the sample.
- Local flattening or buckling should not occur on the free edges of the sample being tested.
- The application of the load on the sample being tested should be correctly aligned in order to avoid distorting the results obtained in the test.
- There should not be any interference in the damaged area in order to adequately produce the progression of damage.

2

- The stresses that are created outside the plane defined by the sample as a result of the local buckling on the sample, which has previously endured an impact, should not be restricted, as the result of said restriction would be that the damage incurred on the sample by the impact would not progress, and therefore the measurement taken by the tool would not be the desired measurement.
- The friction between the sample and the tool should not be a cause of imprecision in the results obtained.
- There should be a space that allows the deformation of the sample during compression.
- Finally, it should be possible to place strain gages for confirming that the test has been carried out correctly, that is, compression of the sample has occurred after an impact and that buckling did not occur in said sample before the compression rupture.

The tool object of the present invention has been designed in compliance with all of the requirements listed above, being capable of stabilizing with respect to buckling of the sample to be tested by means of a plurality of protruding elements on which said sample is supported in order to obtain said stability with respect to buckling. Preferably, these protruding elements will have the shape of vertical nerves. The tool of the invention also comprises a free zone without protruding elements in order to keep it from interfering in the progression of damage. Thus, with the tool of the invention, on through reducing the dimension without support of the sample over the tool with which the test will be conducted, the critical buckling load increases, which counterbalances the effect of the lower thickness of the composite laminate that configures the sample to be tested.

Other features and advantages of the present invention will be disclosed in the detailed description that follows of an exemplary, non-limiting, embodiment of its object in relation to the accompanying Figures.

## BRIEF DESCRIPTION OF THE FIGURES

Figure 1 displays a schematic view of the tool for conducting the compression tests of composite materials, object of the present invention.

Figures 2a, 2b and 2c display a schematic view of the different components which make up the tool for conducting the compression tests of composite materials, object of the present invention.

Figures 3 and 4 display in detail of the stabilization system of the tool, object of the present invention, by means of vertical nerves for carrying out the compression tests on composite materials (Figure 3 displays the vertical nerves arranged on the fixed plate of the tool and Figure 4 displays the vertical nerves arranged on the moveable plate of the tool).

Figures 5a and 5b display the positioning of the support over the samples to be tested in accordance with the earlier known art and in accordance with a tool with vertical nerves in accordance with the present invention, respectively.

Figure 6 displays a schematic view of the different components of the tool for performing the compression tests of composite materials, object of the present invention.

Figures 7a to 7e display different possible embodiments of the fixed and moveable plates of the tool for performing the compression tests of composite materials, object of the present invention.

## DETAILED DESCRIPTION OF THE INVENTION

Thus, in accordance with a preferred embodiment of the invention, a tool 10 is provided for carrying out of compression test on composite material samples, which can be employed on samples of any width, including samples with a thickness of less than 4 mm.

Tool 10 comprises two plates, 20 and 30, plate 20 is fixed to base 40 while plate 30 is moveable with respect to plate 20, in such a way that it can slide parallel with respect to said plate 20. It is also possible for the two plates, 20 and 30, to be fixed, although this configuration will only serve for a given thickness value of sample 200 to be tested. For conducting after impact compression tests on sample 200, said sample 200 is placed between fixed and moveable plates 20 and 30. As will be explained in detail further on, fixed plates 20 and 30 comprise a plurality of protruding elements, preferably in the shape of nerves, in such a way that sample 200 remains supported over the protruding elements of fixed plate 20 and moveable plate 30 while the compression test is being performed. Furthermore, tool 10 comprises an upper attaching element 50 that immobilizes the top of sample 200 to be tested. Once the entire assembly of tool 10 with sample 200 has been duly set up, said assembly is placed on the universal testing machine in order to conduct the compression test. For its part, fixed plate 20 comprises corresponding nerves 100 symmetric with respect to moveable plate 30, leaving the set of nerves 100 on plates 20 and 30 facing each other, with sample 200 being placed between the two.

In accordance with the main example of the invention, nerves 100 of plates 20 and 30 are placed in a substantially vertical manner with respect to base 40 of said tool 10.

Furthermore, tool 10 of the invention comprises a free zone 11 without nerves, both on fixed plate 20 and on moveable plate 30, said free zone 11 preferably having a larger size than the size of the damage produced by impact on sample 200, in such a way that said free zone 11 without nerves prevents said nerves 100 from interfering with the progression of damage. In this way the stresses that are created outside the plane defined by sample 200 as a result of the local buckling on said sample 200, which has previously endured an impact, are not restricted, given that the result of said restriction would be that the damage incurred on the sample by the impact would not progress, in which case the measurement taken by the tool would not be the desired measurement, that of a measurement of the compression after impact. Consequently, tool 10 of the invention, by reducing the dimension of sample 200 that is left without support of tool 10, increases the critical buckling load (see Formula 1 attached) of said sample 200, which counterbalances the effect of the lower thickness of the laminate that comprises sample 200 to be tested, in such a way that said tool 10 can be employed on all types of samples, including those with a thickness of less than 4 mm. In compliance with all of the previously mentioned requirements, tool 10 has been designed to be capable of stabilizing with respect to buckling sample 200 to be tested by means of a substantially vertical plurality of nerves 100, and with a free zone 11 without nerves.

$$\sigma_{crit} = K.E_{eq} \cdot \left( \frac{t}{b} \right)^2 \qquad\qquad \text{Fórmula 1}$$

in which:

$\sigma_{crit}$ is the critical buckling load

t is the thickness of sample 200

E is the equivalent modulus of elasticity of the material of which sample 200 is made.

b is the value of the short distance between the supports that hold sample 200, which is being tested.

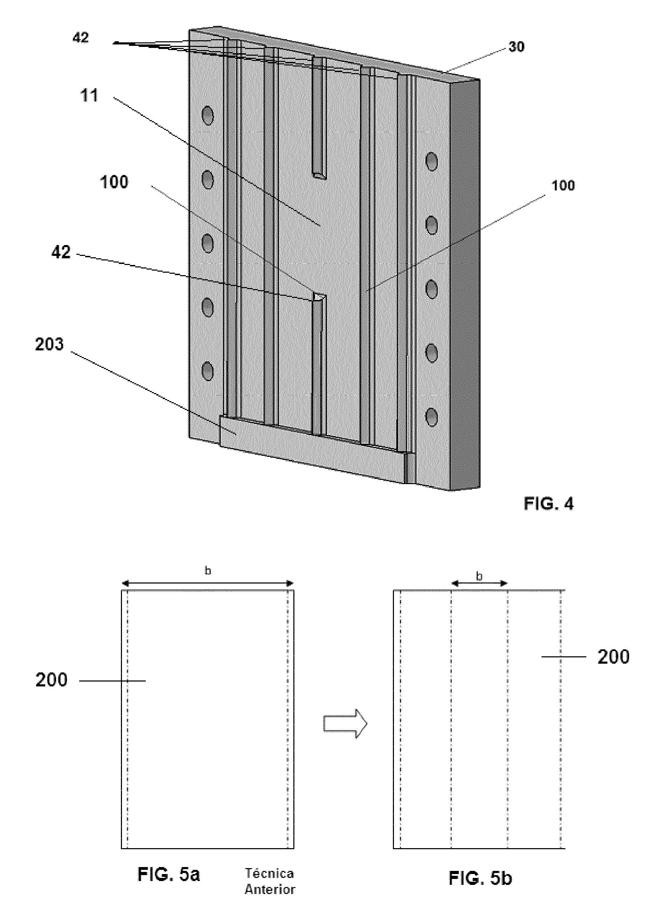

Thus, Figures 5a and 5b show the lateral stabilization with respect to buckling of sample 200 on varying short distance b between supports. Therefore, for a same thickness value t of sample 200, in the degree that the short distance value between supports diminishes, the value of the critical buckling load of said sample 200 increases, and so the buckling of the same is delayed, thus obtaining that it will not affect the measurement to be taken of the after impact compression.

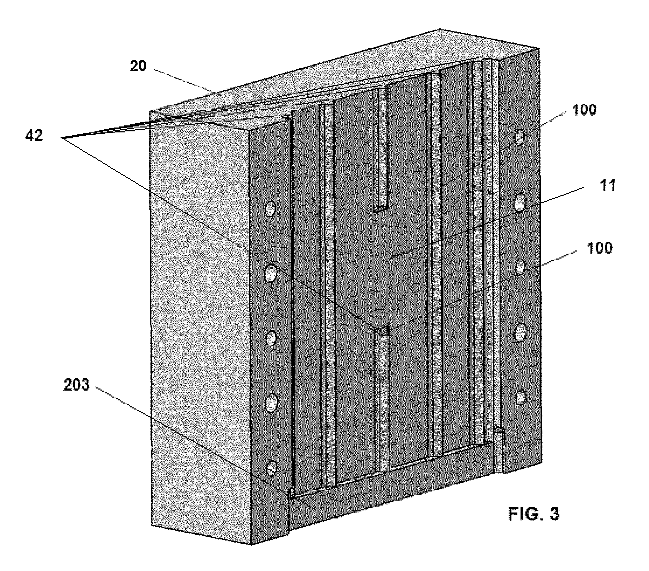

As can be seen in Figures 3 and 4, nerves 100 of tool 10 are preferably of a knife blade type, given that they have a minimal contact surface with sample 200 to be tested: The aim is to obtain a line of support between tool 10 and sample 200, such that a simple support is simulated, thus avoiding the buckling of sample 200 while at the same time minimizing the friction between sample 200 and tool 10, and also having to obtain the guarantee that said nerves 100 do not catch on and damage sample 200 to be tested. At the same time nerves 100 of plates 20 and 30 comprise a rounded top 42 to keep said nerves 100 from catching on the sample when the test is conducted. Thus the machining of nerves 100 will have adequate tolerances and precise rounded edges in order to avoid any harm to the operator caused by edges that are too sharp.

Preferably tool 10 object of the invention should be made of steel, given that it increases the sturdiness and durability of the tool. It is also possible to make tool 10 out of Teflon, as this material has the important advantage of being able to minimize the friction between sample 200 and said tool 10.

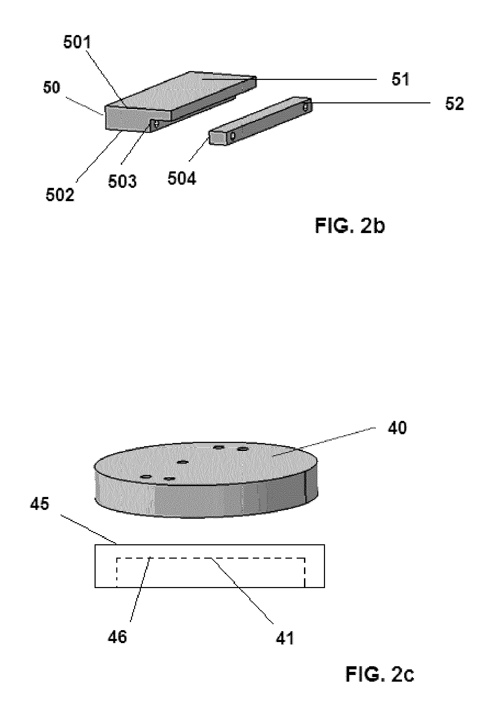

Preferably base 40 of tool 10 is circular and comprises a perimeter salient 41 on the bottom, in such a way that said base 40 can be easily and quickly be engaged on the bottom plate of the universal testing machine with which the compression test is going to be conducted (see detail of Figure 2c). This will keep tool 10 from moving or becoming displaced from its position when conducting the compression test on the sample 200 in question.

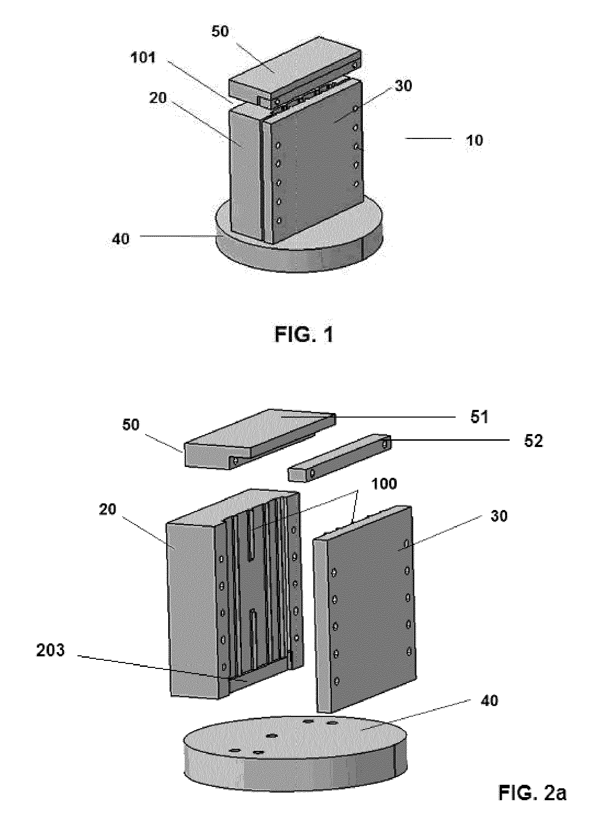

To enable the compression test, tool 10 of the invention comprises gap 101 (see Figure 1) or free space between fixed and moveable plates 20 and 30 after they have been mounted together with sample 200 to be tested, and top element 50, in such a way that once tool 10 is mounted on the universal compression testing machine, the plates of the same squeeze to compress sample 200, without hitting top element 50 and compressing the assembly formed by fixed and moveable plates 20, 30.

The unions of the different components of tool 10 are preferably done with screws, maintaining the normal size and distance design requirements with respect to said unions.

The top and bottom positioning of tool 10 by means of top element 50 and base 40, respectively, on the universal compression testing machine must be flat. Thus, there are several critical tolerances that tool 10 of the invention must fulfil so that the test can be conducted correctly, said tolerances having to be maintained to around 0.02 mm:

- Surfaces 45 and 46 of base 40 must be flat and parallel to each other.
- Parts 203 of fixed plate 20 and moveable plate 30 have to be perpendicular to base 40.
- The plane having nerves 30 and parts 203, both for fixed plate 20 and moveable plate 30 have to be perpendicular to base 40.
- Parts 203 of fixed plate 20 and moveable plate 30 have to be flat and parallel to each other.
- Surfaces 501 and 502 of top element 50 must be flat and parallel to each other.
- Surface 503 of top element 50 and surface 504 of part 52 have to be flat and parallel to each other.
- Surface 503 of top element 50 has to be perpendicular to surfaces 501 and 502 of said element.

In accordance with the invention, the design of the number of nerves 100 of tool 10, as well as the size of free zone 11 without nerves is calculated on the basis of the thickness t of sample 200 to be tested, specifically the minimum thickness of the sample to be tested, as well as the free progression of the impact damage on sample 200 following the compression to which the sample is submitted during the test. In this way a balance is reached between the two values, given that the greater the number of nerves 100, the greater the critical buckling load, and, therefore, how far it will be from sample 200 being damaged by buckling rather than by compression. However free zone 11 will be smaller in this case, and so there would be a risk of it interfering with the progression of damage. Tool 10 of the invention obtains lateral stabilization of sample 200 being tested and makes it possible to work with a sample 200 having any thickness, including samples with a thickness of less than 4 mm.

There is also a possibility, in accordance with another possible embodiment of tool 10 of the invention, of arranging nerves 100 on plates 20 and 30 in a basically horizontal manner, placed in a plane parallel to the plane that defines base 40 of tool 10.

In the same manner, top element 50 of tool 10 can comprise two parts 51 and 52 in such a way that part 52 displaces parallel to base 40 in order to adjust on top of part 51 leaving sample 200 between both. During a compression test, top element 50 and base 40 are the pieces that suffer most, and so the preference should be to make them out of a metallic material, comprising a cemented back to increase its hardness.

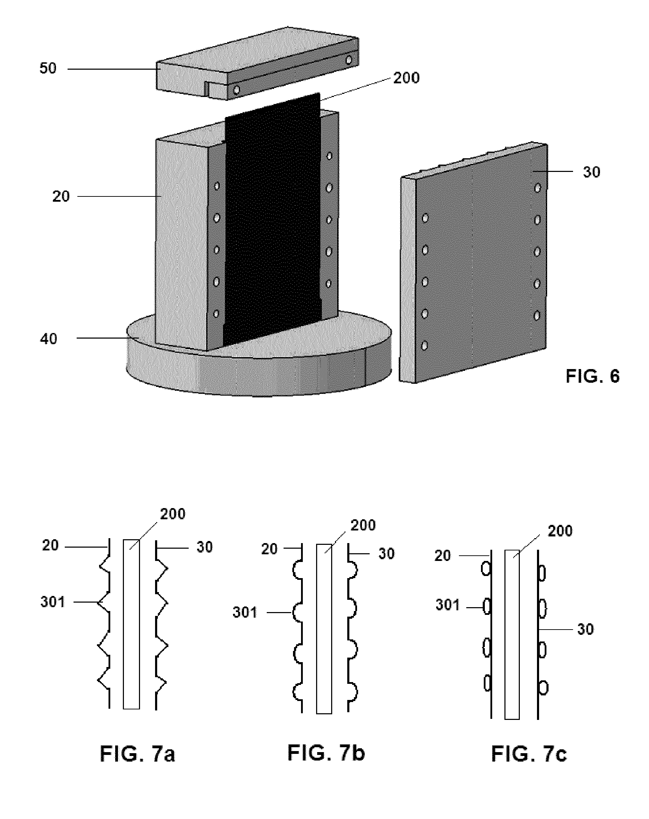

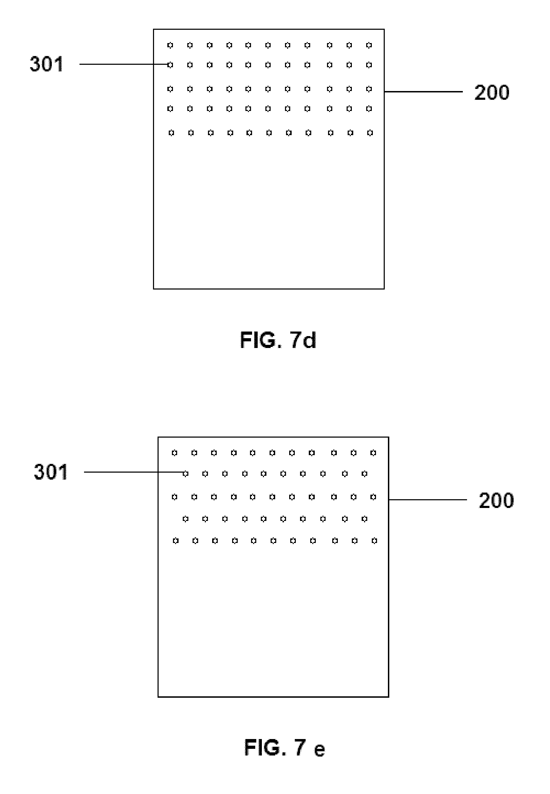

The embodiment shown in Figure 7d displays the arrangement of elements 301, which protrude from both faces of plates 20 and 30 in such a way that they put pressure on sample 200 when the tool is mounted. As can be seen in Figure 7d, free zone 11 of elements 301 in this case, is obtained by means of a lower intensity of said elements 301, so as not to interfere with the progression of damage of sample 200. As has previously been mentioned, the features of tool 10 of the invention consist in that plates 20, 30 comprise protruding elements that can be continuous (nerves 100) or discrete (elements 301). In turn, elements 301 can have different shapes, as detailed in Figures 7a, 7b and 7c. In all of these cases, the aim is to increase the value of the critical buckling load of sample 100 and, consequently, the lateral stability of the same. Moreover, in all of the embodiments disclosed, there is a free zone 11 that is deployed in a symmetrical manner on plates 20, 30 and that coincides with the impact damage area of sample 200. Free zone 11 has the aim of not interfering with the progression of damage of said sample 200.

As shown in Figure 2, the machining of part 203 and of nerves 100 on plate 20 (the same would occur on plate 30) is done at the same time, so that both surfaces stay on the same plane parallel to the plane defined by sample 200, in such a way that said sample 200 is pressured equally when said sample 200 is placed between plates 20 and 30.

Although the present invention has been disclosed entirely in connection with the preferred embodiments, it is obvious that those modifications may be introduced that are within its scope, which should not be considered limited by the previous embodiments, but rather by the content of the following claims.

**Claims**

1. Tool (10) for conducting compression tests on samples (200) of composite materials that have previously endured an impact, **characterized in that** it comprises a gap for the purpose of housing samples (200) to be tested, and further comprising said tool (10) a plurality of elements protruding symmetrically to each other on which sample (200) to be tested is supported, and which laterally stabilize said sample with respect to buckling.

2. Tool (10) in accordance with claim 1 in that it comprises a fixed plate (20) and a moveable plate (30) such that moveable plate (30) is capable of sliding parallel with respect of fixed plate (20) in such a way that the gap for housing sample (200) to be tested remains sustained between both plates (20, 30), and so that said plates (20, 30) comprise a plurality of elements protruding symmetrically to each other on which sample (200) is supported.

3. Tool (10) in accordance with any of claims 1 and 2, **characterized in that** the protruding elements comprise a plurality of discrete elements (301).

**4.** Tool (10) in accordance with any of claims 1 and 2, **characterized in that** the protruding elements are continuous elements in the shape of nerves (301).

**5.** Tool (10) in accordance with claim 4 in which nerves (100) are arranged on plates (20, 30) in a substantially vertical manner with respect to a fixed base (40) beneath said tool (10).

**6.** Tool (10) in accordance with claim 4 in which nerves (100) are arranged on plates (20, 30) in a substantially horizontal manner with respect to a fixed base (40) beneath said tool (10).

**7.** Tool (10) in accordance with claims 4 to 6,**characterized in that** nerves (100) are of a knife blade type, having a minimal contact surface with sample (200) to be tested.

**8.** Tool (10) in accordance with claims 4 to 7, **characterized in that** nerves (100) comprise rounded zones (42) at one of their ends, so as to to keep said nerves (100) from catching on sample (10) during the test in relation to compression.

**9.** Tool (10) in accordance with any of the previous claims, **characterized in that** it comprises free zone (11) without protruding elements and coinciding with the support zone of sample (200) which has incurred damage due to a prior impact.

**10.** Tool (10) in accordance with claim 9, **characterized in that** the number of protruding elements and the size of free zone (11) is calculated on the basis of the minimum thickness of sample (200) to be tested.

**11.** Tool (10) in accordance with claim 10, **characterized in that** the number of protruding elements and the size of free zone (11) is calculated in such a way that it enables conducting a compression test on a sample (200) having a thickness of less than 4 mm.

**12.** Tool (10) in accordance with any of the previous claims, **characterized in that** the machining of a bottom part (203) of each one of plates (20, 30) and of the protruding elements must be done at the same time, in such a way that the surfaces defined by bottom part (203) and by the plane which contains the ends of the protruding elements remain on a single plane, parallel to the plane defined by sample (200) to be tested.

**13.** Tool (10) in accordance with any of the previous claims, **characterized in that** it also comprises substantially circular base (40) that comprises in turn a bottom perimeter salient (41) in such a way that it enables engaging tool (10) on a machine that provides the pressure for carrying out the compression test.

**14.** Tool (10) in accordance with claim 13, **characterized in that** it comprises a top element (50) on the opposite end to that of base (40), comprising in turn two parts (51, 52) in such a way that part (52) displaces parallel to base (40) in order to adjust over part (51) leaving sample (200) between both parts (51, 52).

**15.** Tool (10) in accordance with claim 14, **characterized in that** top element (50) and base (40) are made out of a metallic material having a cemented back for hardness.

**FIG. 1**

**FIG. 2a**

**FIG. 2b**

**FIG. 2c**

FIG. 3

FIG. 4

FIG. 5a Técnica Anterior

FIG. 5b

FIG. 6

FIG. 7a          FIG. 7b          FIG. 7c

301 — 200

**FIG. 7d**

301 — 200

**FIG. 7 e**

## INTERNATIONAL SEARCH REPORT

| International application No |
| --- |
| PCT/ES2012/070087 |

**A. CLASSIFICATION OF SUBJECT MATTER**
INV.  G01N3/04     G01N3/08
ADD.

According to International Patent Classification (IPC) or to both national classification and IPC

**B. FIELDS SEARCHED**

Minimum documentation searched (classification system followed by classification symbols)
G01N

Documentation searched other than minimum documentation to the extent that such documents are included in the fields searched

Electronic data base consulted during the international search (name of data base and, where practicable, search terms used)

EPO-Internal, WPI Data

**C. DOCUMENTS CONSIDERED TO BE RELEVANT**

| Category* | Citation of document, with indication, where appropriate, of the relevant passages | Relevant to claim No. |
| --- | --- | --- |
| X | US 3 559 473 A (DUDDERAR THOMAS D ET AL) 2 February 1971 (1971-02-02) the whole document ----- | 1-15 |
| X | US 2 368 900 A (TEMPLIN RICHARD L) 6 February 1945 (1945-02-06) figure 2 ----- | 1-15 |
| X | US 4 850 231 A (RALFS COLIN A [GB] ET AL) 25 July 1989 (1989-07-25) column 3 - column 4; figures 1-4 ----- | 1-15 |
| X | US 5 902 936 A (SERRA-TOSIO JEAN-MARIE [FR] ET AL) 11 May 1999 (1999-05-11) column 1, lines 33-62; figure 3 ----- -/-- | 1-15 |

| [X] Further documents are listed in the continuation of Box C. | [X] See patent family annex. |
| --- | --- |

* Special categories of cited documents :

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| 10 September 2012 | 17/09/2012 |

| Name and mailing address of the ISA/ European Patent Office, P.B. 5818 Patentlaan 2 NL - 2280 HV Rijswijk Tel. (+31-70) 340-2040, Fax: (+31-70) 340-3016 | Authorized officer Cantalapiedra, Igor |
| --- | --- |

Form PCT/ISA/210 (second sheet) (April 2005)

## INTERNATIONAL SEARCH REPORT

International application No

PCT/ES2012/070087

| C(Continuation). DOCUMENTS CONSIDERED TO BE RELEVANT | | |
|---|---|---|
| Category* | Citation of document, with indication, where appropriate, of the relevant passages | Relevant to claim No. |
| A | US 5 297 441 A (SMITH GREGORY J [US] ET AL) 29 March 1994 (1994-03-29) the whole document ----- | 1-15 |
| A | US 4 840 070 A (RALFS COLIN A [GB] ET AL) 20 June 1989 (1989-06-20) the whole document ----- | 1-15 |
| A | DE 10 2008 050652 A1 (UNIV DRESDEN TECH [DE]) 15 April 2010 (2010-04-15) figures 4, 5, 6 ----- | 1 |
| A | US 6 000 284 A (SHIN EUY-SIK EUGENE [US] ET AL) 14 December 1999 (1999-12-14) figures 6, 7 ----- | 1 |
| A | US 4 458 538 A (GUNDERSON DENNIS E [US] ET AL) 10 July 1984 (1984-07-10) column 4, lines 59-68 ----- | 1 |
| A | US 2007/180927 A1 (BRODLAND G W [CA] BRODLAND G WAYNE [CA]) 9 August 2007 (2007-08-09) paragraphs [0115] - [0117] ----- | 1 |

**EP 2 813 836 A1**

## INTERNATIONAL SEARCH REPORT
Information on patent family members

| International application No |
|---|
| PCT/ES2012/070087 |

| Patent document cited in search report | | Publication date | Patent family member(s) | | Publication date |
|---|---|---|---|---|---|
| US 3559473 | A | 02-02-1971 | NONE | | |
| US 2368900 | A | 06-02-1945 | NONE | | |
| US 4850231 | A | 25-07-1989 | DE 3861835 D1<br>EP 0300702 A2<br>GR 3001827 T3<br>US 4850231 A | | 04-04-1991<br>25-01-1989<br>23-11-1992<br>25-07-1989 |
| US 5902936 | A | 11-05-1999 | FR 2762393 A1<br>US 5902936 A | | 23-10-1998<br>11-05-1999 |
| US 5297441 | A | 29-03-1994 | NONE | | |
| US 4840070 | A | 20-06-1989 | DE 3735484 A1<br>GB 2197489 A<br>US 4840070 A | | 28-04-1988<br>18-05-1988<br>20-06-1989 |
| DE 102008050652 A1 | | 15-04-2010 | NONE | | |
| US 6000284 | A | 14-12-1999 | NONE | | |
| US 4458538 | A | 10-07-1984 | NONE | | |
| US 2007180927 | A1 | 09-08-2007 | NONE | | |

Form PCT/ISA/210 (patent family annex) (April 2005)

15